# EUROPEAN PATENT SPECIFICATION

(11) **EP 4 604 560 B1**
(45) Date of publication and mention of the grant of the patent: **04.11.2026**
(21) Application number: 25155217.0
(22) Date of filing: 31.01.2025
(51) Int. Cl.: H04N 23/50, B23K 26/21, B29C 65/02, B60R 11/04, G03B 17/08, G03B 30/00, H01R 13/52, H04N 23/51, H04N 23/57, H05K 7/14, H10F 39/00

(54) **CAMERA MODULE FOR VEHICLE AND ITS MANUFACTURING METHOD**
KAMERAMODUL FÜR EIN FAHRZEUG UND HERSTELLUNGSVERFAHREN DAFÜR
MODULE DE CAMÉRA POUR VÉHICULE ET SON PROCÉDÉ DE FABRICATION

(30) Priority: 16.02.2024 KR 20240022419
(43) Date of publication of application: 20.08.2025
(73) Proprietor: Hyundai Mobis Co., Ltd., Gangnam-gu Seoul 06141 (KR)
(72) Inventor: CHI, Eun Ho, 16925 Yongin-si (KR)
(74) Representative: Vossius & Partner Patentanwälte Rechtsanwälte mbB

(56) References cited:
- CN-A- 108 833 759
- CN-A- 114 979 448
- KR-A- 20160 092 628
- KR-A- 20190 051 642
- US-A1- 2017 295 306
- US-A1- 2018 152 605
- US-B2- 9 077 098

## Description

### BACKGROUND

### 1. Field

The present disclosure relates to camera module for vehicle and its manufacturing method.

### 2. Description of the Related Art

The content described in this section merely provides background information for the present disclosure, but does not constitute prior art.

Various kinds of cameras are placed in the vehicle, and the cameras are used for various purposes. In recent years, the specifications of camera for vehicle have been advanced. This is because the usage of camera for vehicle is subdivided, and a high pixel and a high resolution are required. As the specifications required for camera for vehicle are advanced, the size of an image sensor mounted on camera for vehicle is increasing.

Since the amount of heat generation increases as the size of the image sensor increases, a housing of the camera may be made of a metal material to dissipate heat. In order to fabricate a housing using metal, die casting, metal injection molding (MIM), forging, or the like may be utilized. As such, when the housing of the camera is fabricated using metal, there is a disadvantage that the manufacturing cost is high.

For cameras for vehicle, watertightness is an important factor that determines the performance and quality of the product. When the watertightness is poor, problems such as shortening of the life of the product may occur.

There is a need for a structure or a manufacturing method of a camera for vehicle, which is excellent in watertightness and may reduce a manufacturing cost.

Accordingly, the present disclosure is intended to solve these problems.

The problems to be solved by the present disclosure are not limited to the above-mentioned problems, and other problems that are not mentioned will be clearly understood by those skilled in the art from the description below.

US 2018/152605 A1 discloses a camera module where a pre-fabricated terminal housing is attached to a rear housing portion via heat staking.

CN 108 833 759 A discloses forming a waterproof layer by injection molding over a connector.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

A primary purpose of the present disclosure is to provide a camera module capable of reducing manufacturing costs. Another primary object of the present disclosure is to provide a camera module having excellent (i.e., superior) watertightness.

The present invention is specified by the independent claims. Preferred embodiments are defined by the dependent claims. In a general aspect of the disclosure, a camera module for a vehicle, includes: a lens module; a front body configured to insert a part of the lens module; a substrate disposed inside the front body; a rear body coupled to the front body; and a terminal unit connected to the substrate, wherein the rear body includes: a rear body plate disposed in a seating groove portion formed along an inner peripheral surface of the front body; and a terminal housing joined to the rear body plate by thermal fusion, and wherein the terminal unit extends longitudinally from a portion connected to the substrate and penetrates the terminal housing.

The terminal housing may include an inserting portion inserted into a first hole formed in a center of the rear body plate, wherein an inner peripheral surface of the inserting portion may surround an outer peripheral surface of the terminal unit.

The terminal housing may further include a plurality of coupling members penetrating a plurality of second holes formed in the rear body plate.

The plurality of coupling members may be at least partially joined to the inserting portion by thermal fusion.

A watertight seal may be formed when the plurality of coupling members are joined to the inserting portion.

The rear body may further include an O-ring disposed between the terminal housing and the rear body plate.

The terminal housing may be made of plastic, and the rear body plate may be made of metal.

A watertight seal may be formed by coupling the rear body to the front body.

In another general aspect of the disclosure, a method for manufacturing a camera module for a vehicle, includes: fitting an O-ring into a housing groove portion formed in a terminal housing; fitting the terminal housing to a rear body plate; and performing thermal fusion bonding to join a plurality of coupling members formed in the terminal housing and the rear body plate, wherein the fitting of the terminal housing to the rear body plate comprises fitting an inserting portion and each of the plurality of coupling members formed in the terminal housing to correspond to a first hole and each of a plurality of second holes formed in the rear body plate.

The O-ring may be in a state of elastic deformation to provide a watertight seal with the terminal housing.

In the present invention, a camera module for a vehicle, includes: a lens module; a front body configured to insert a part of the lens module; a substrate disposed inside the front body; a rear body coupled to the front body; and a terminal unit connected to the substrate, wherein the rear body includes: a rear body plate disposed in a seating groove portion formed along an inner peripheral surface of the front body; and a terminal housing coupled to the rear body plate, wherein the terminal housing includes: a first housing plate portion perpendicular to an optical axis of the camera module; a second housing plate portion spaced apart from the first housing plate portion; and a plurality of first column portions penetrating a plurality of third holes formed in the rear body plate, one end being connected to the first housing plate portion, and the other end being connected to the second housing plate portion, and wherein the terminal unit extends longitudinally from a portion connected to the substrate and penetrates the terminal housing.

The rear body may be formed by using insert injection molding in which melted plastic is injected into a mold after the rear body plate is disposed in the mold, wherein the terminal housing and the rear body plate may be coupled to each other in response to the terminal housing being generated by cooling of the melted plastic.

A watertight seal may be formed by coupling the rear body to the front body.

In the present invention, a method for manufacturing a camera module for a vehicle, includes: placing a rear body plate made of metal in a mold; injecting molten plastic into the mold to create a terminal housing; and cooling the molten plastic to create the terminal housing and coupling the terminal housing and the rear body plate to each other, wherein the terminal housing includes: a first housing plate portion perpendicular to an optical axis of the camera module; a second housing plate portion spaced apart from the first housing plate portion; and a plurality of first column portions penetrating a plurality of third holes formed in the rear body plate, one end of the plurality of first column portions being connected to the first housing plate portion, and the other end of the plurality of first column portions being connected to the second housing plate portion.

The method may further include: fitting an O-ring into a housing groove portion formed in the terminal housing; fitting the terminal housing to the rear body plate; and performing thermal fusion bonding to join a plurality of coupling members formed in the terminal housing and the rear body plate, wherein the fitting of the terminal housing to the rear body plate comprises fitting an inserting portion and each of the plurality of coupling members formed in the terminal housing to correspond to a first hole and each of a plurality of second holes formed in the rear body plate.

The O-ring may be in a state of elastic deformation to provide a watertight seal with the terminal housing.

As described above, according to the present embodiment, there is an effect that the manufacturing cost of camera module for vehicle may be reduced.

In addition, there is an effect that the watertightness of camera module for vehicle may be improved.

### BRIEF DESCRIPTION OF THE DRAWINGS

FIG. 1 is a perspective view of a camera module for vehicle according to a first embodiment of the present disclosure.
FIG. 2 is an exploded perspective view of a camera module for vehicle according to a first embodiment of the present disclosure.
FIG. 3 is a cross-sectional view taken along line A-A' in FIG. 1.
FIG. 4 is a diagram showing a method for manufacturing a rear body of a camera module for vehicle according to a first embodiment of the present disclosure.
FIG. 5 is a perspective view of a camera module for vehicle according to the present invention.
FIG. 6 is an exploded perspective view of a camera module for vehicle according to the present invention.
FIG. 7 is a cross-sectional view of the camera module taken along line B-B' of FIG. 5.
FIGS. 8A and 8B are diagrams showing other embodiments of a rear body of the present disclosure.

### DETAILED DESCRIPTION

Hereinafter, some embodiments of the present disclosure will be described in detail with reference to exemplary drawings. Note that when components in each drawing are denoted by reference symbols, the same components are denoted by the same symbols as much as possible even if they are denoted on different drawings. In addition, in describing the present disclosure, if it is determined that a specific description of a related known configuration or function may obscure the subject matter of the present disclosure, the detailed description thereof will be omitted.

In describing components of embodiments of the present disclosure, symbols such as first, second, i), ii), a), and b) may be used. These symbols are only used to distinguish the components from other components, and the nature, sequence, order, or the like of the components is not limited by the symbols. In the specification, when a part is said to "includes" or "comprises" a certain component, this means that it does not exclude other components but may further include other components, unless explicitly stated to the contrary.

The detailed description disclosed below in connection with the appended drawings is intended to describe exemplary embodiments of the disclosure and is not intended to represent the only embodiments in which the disclosure may be practiced.

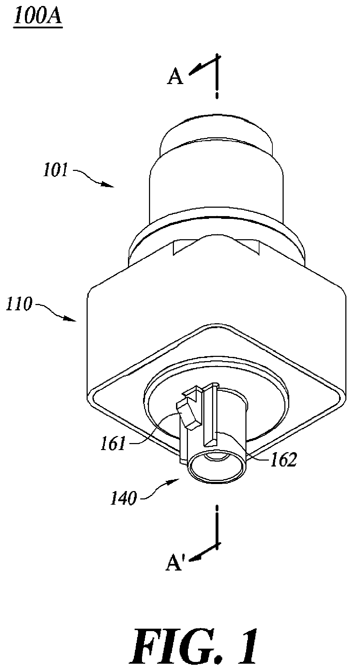

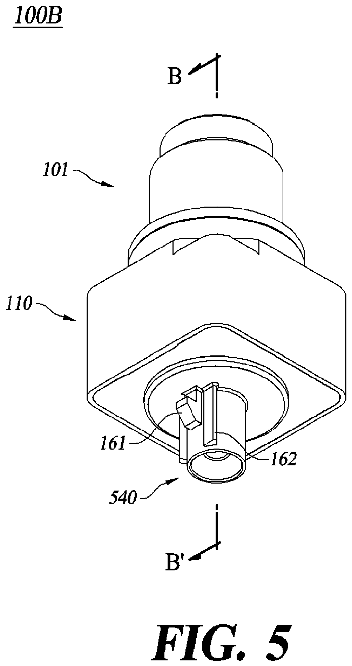

The respective components of camera module for vehicle 100 such as the lens module 101 and the image sensor, which will be described later, are aligned on an optical axis. The axis shown as A-A' in FIG. 1 or B-B' in FIG. 5 represents an axis passing through the center of the camera module for vehicle 100, and the optical axis of the camera module for vehicle 100 according to the present disclosure may be the same as the axis of A-A' or B-B.

Hereinafter, a first embodiment and a second embodiment of various embodiments of the present disclosure will be described.

The first embodiment will be first described with reference to FIGS. 1 to 4, and then the second embodiment (present invention) will be described with reference to FIG. 5 to FIG. 7.

FIG. 1 is a perspective view of a camera module for vehicle according to a first embodiment of the present disclosure.

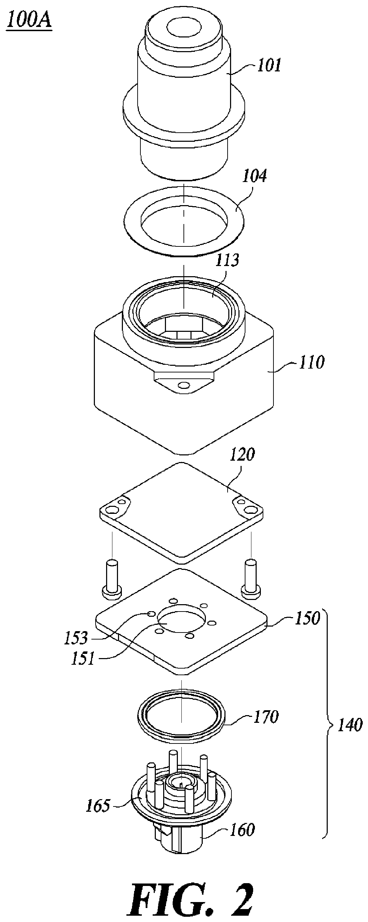

FIG. 2 is an exploded perspective view of a camera module for vehicle according to a first embodiment of the present disclosure.

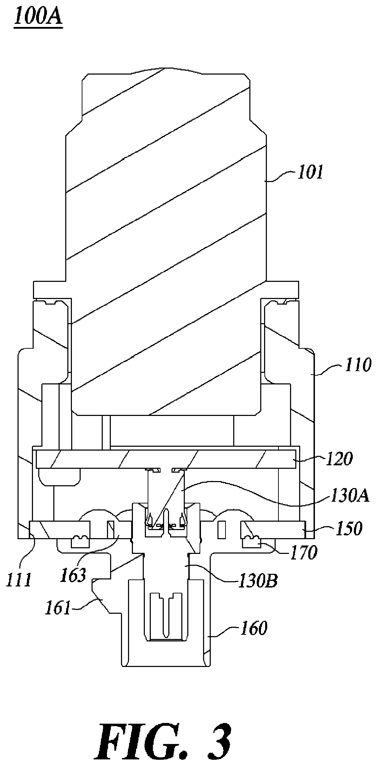

FIG. 3 is a cross-sectional view taken along line A-A' in FIG. 1.

Referring to FIGS. 1 to 3, a camera module for vehicle 100A according to a first embodiment of the present disclosure includes a lens module 101, a front body 110, a substrate 120, an image sensor (not shown), a terminal unit 130, a rear body 140, etc.

The lens module 101 includes a lens, a lens barrel, etc. At least a portion of the lens may be inserted into the lens barrel to engage the lens barrel. At least a portion of the lens barrel may be inserted into the front body 110. The lens barrel may protect the lens from external impacts or foreign objects. The lens module 101 and the front body 110 may be coupled by using an epoxy 104. The epoxy 104 is applied and then cured to join the lens module 101 and the front body 110. The form of the epoxy 104 disclosed in the drawings shows a state in which the epoxy 104 is applied and then cured.

A front body hole 113 may be formed in the front body 110. A part of a lens barrel of the lens module 101 may be inserted into the front body hole 113.

A substrate 120 is mounted inside the front body 110. For example, screws may be used to couple the front body 110 and the substrate 120.

The front body 110 is coupled to the rear body 140. A rear body plate 150 is disposed on a seating groove portion 111 formed in the front body 110. Laser welding or bonding may be used to fix the rear body plate 150 to the seating groove portion 111.

The seating groove portion 111 may be formed along an inner peripheral surface of the front body 110. The seating groove portion 111 may be formed by recessing an inner peripheral surface of the front body 110. In this case, the recessing direction may be a direction perpendicular to the optical axis. When the rear body plate 150 is disposed on the seating groove portion 111, one surface and a side surface of the rear body plate 150 may be in surface contact with the front body 110.

The substrate 120 may be mounted with an image sensor. The image sensor is used to detect light and convert the light into a digital image, and is used in various fields such as a camera, a smartphone, and a robot. The image sensor is arranged to be aligned with respect to the optical axis.

A terminal unit 130 is connected to one surface of the substrate 120. It is also possible to perform welding in order to couple the terminal unit 130 to the substrate 120. The substrate 120 and the terminal unit 130 are electrically connected.

One end 130A of the terminal unit 130 may be connected to the substrate 120, and the other end 130B of the terminal unit may be formed to penetrate the terminal housing 160. In this case, the outer peripheral surface of the terminal unit 130 may be in contact with the inner peripheral surface of the termination housing 160.

The rear body 140 may be coupled to the front body 110 to ensure watertightness. The rear body 140 may include a terminal housing 160.

A first protrusion portion 161 and a second protrusion portion 162 may be formed in the terminal housing 160.

The shapes of the first protrusion portion 161 and the second protrusion portion 162 are complex, which may increase the fabricating cost when the terminal housing 160 is made of metal. According to the present disclosure, the terminal housing 160 may be fabricated of a plastic material other than metal, thereby reducing the manufacturing cost.

The rear body 140 according to the first embodiment of the present disclosure may include a rear body plate 150, a terminal housing 160, an O-ring 170, etc.

The rear body plate 150 may include a first hole 151 in the center. The first hole 151 may be disposed to be in contact with an outer peripheral surface of an inserting portion 163 to be described later. The rear body plate 150 may include a plurality of second holes 153. The plurality of second holes 153 may be formed to surround the first hole 151. A plurality of coupling members 164 may be inserted into the plurality of second holes 153. Although the plurality of second holes 153 is six in the drawing, it is not limited thereto.

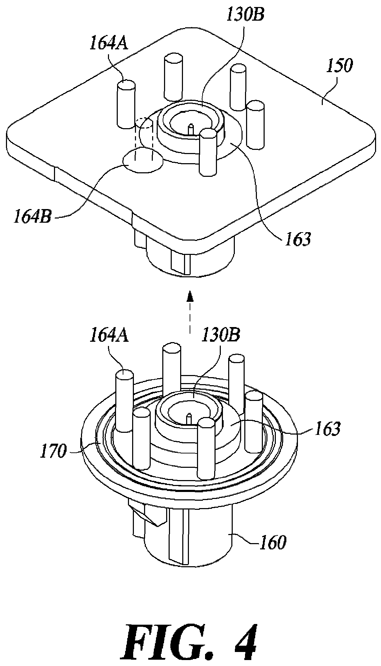

The terminal housing 160 may include an inserting portion 163 (FIGS. 3 and 4). The inserting portion 163 may be inserted into the first hole 151. An inner peripheral surface of the inserting portion 163 may be disposed to surround an outer peripheral surface of the terminal unit 130B.

The terminal housing 160 may include a plurality of coupling members 164. The plurality of coupling members 164 may be positioned between the inserting portion 163 and a housing groove portion 165. The plurality of coupling members 164 may extend from one surface of the terminal housing 160 in a direction parallel to the optical axis. Each of the plurality of coupling members 164 passes through each of the plurality of second holes 153.

The rear body plate 150 and the terminal housing 160 may be joined to each other by thermal fusion. The plurality of coupling members 164 are different in shape 164A before thermal fusion and shape 164B after thermal fusion (see FIG. 4).

At least a part of the plurality of coupling members 164 may be joined to the inserting portion 163 by thermal fusion. Specifically, the area in which the plurality of coupling members 164B after thermal fusion are in contact with the rear body plate 150 is larger than that of the plurality of coupling members 164A before thermal fusion. That is, a portion of the coupling member 164B deformed by thermal fusion may abut against the inserting portion 163, and a portion of the coupling member 164B may be joined to the inserting portion 163. When the coupling member 164B is joined to the inserting portion 163, the watertightness may be further improved. When the coupling member 164 and the inserting portion 163 are made of the same material, the joining strength due to thermal fusion is higher and the effect of improving watertightness is more excellent, than when they are made of different materials.

An O-ring 170 may be disposed between the terminal housing 160 and the rear body plate 150. The O-ring 170 may be fitted into the housing groove portion 165 (see FIGS. 3 and 4). The housing groove portion 165 formed in the terminal housing 160 may surround the plurality of coupling members 164 and may be formed as a recessed structure.

The O-ring 170 may undergo elastic deformation. When the O-ring 170 is in a state of elastic deformation, a restoring force due to its elasticity may act, thereby improving watertightness. The O-ring (170) may be made of a silicon.

The O-ring 170 is configured to ensure watertight performance, and is not an essential component. When the watertight performance is ensured even without the O-ring 170, the rear body 140 may not include the O-rings 170.

The terminal housing 160 of the rear body 140 according to the first embodiment may be made of plastic, and the rear body plate 150 may be made of metal. The rear body plate 150 may be fabricated of a material having excellent thermal conductivity and capable of being welded. The rear body plate 150 may be fabricated of inexpensive aluminum.

FIG. 4 is a diagram showing a method for manufacturing a rear body of a camera module for vehicle according to a first embodiment of the present disclosure.

Referring to FIGS. 2 and 4, the O-ring 170 may be fitted into the housing groove portion 165 (FIG. 2) of the terminal housing 160 (step 1). The terminal housing 160 fitted with the O-ring 170 may be fitted to the rear body plate 150 (step 2). When performing step 2, the inserting portion 163 and each of the plurality of coupling members 164 are fitted so as to correspond to the first hole 151 (FIG. 2) and each of the plurality of second holes 153 (FIG. 2). Thermal fusion is performed so that the plurality of coupling members 164 and the rear body plate 150 are joined to each other (step 3). The coupling member 164A before thermal fusion and the coupling member 164B after thermal fusion have different shapes (FIG. 4). The contact area of the coupling member 164B after thermal fusion with the rear body plate 150 is larger than that of the coupling member 164A before thermal fusion. The terminal housing 160 and the rear body plate 150 are firmly coupled to each other by thermal fusion, thereby improving watertightness.

FIG. 5 is a perspective view of a camera module for vehicle according to the present invention.

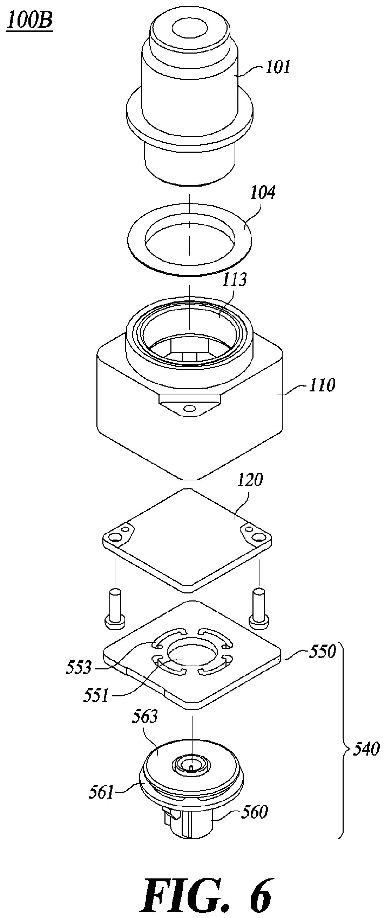

FIG. 6 is an exploded perspective view of a camera module for vehicle according to the present invention.

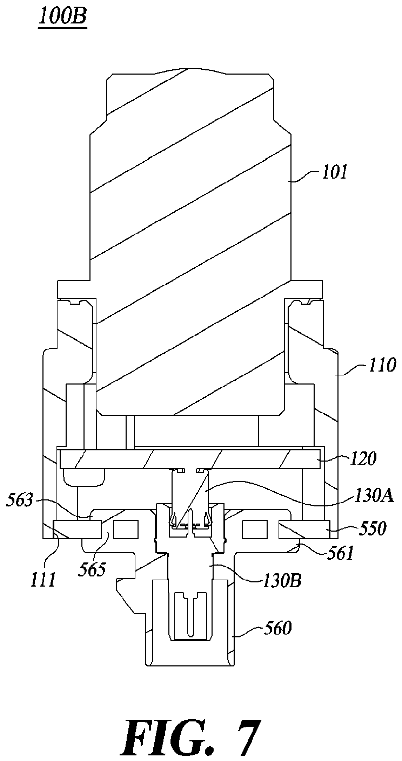

FIG. 7 is a cross-sectional view of the camera module taken along line B-B' of FIG. 5.

Referring to FIGS. 5 to 7, a camera module for vehicle 100B according to the present invention includes a lens module 101, a front body 110, a substrate 120, an image sensor (not shown), a terminal unit 130, a rear body 540.

The lens module 101 may include a lens, a lens barrel, etc. At least a portion of the lens may be inserted into the lens barrel to engage the lens barrel. At least a portion of the lens barrel may be inserted into the front body 110. The lens barrel may protect the lens from external impacts or foreign objects. The lens module 101 and the front body 110 may be coupled by using an epoxy 104. The epoxy 104 is applied and then cured to join the lens module 101 and the front body 110. The form of the epoxy 104 disclosed in the drawings shows a state in which the epoxy 104 is applied and then cured.

A front body hole 113 may be formed in the front body 110. A part of a lens barrel of the lens module 101 may be inserted into the front body hole 113.

A substrate 120 is mounted inside the front body 110. For example, screws may be used to couple the front body 110 and the substrate 120.

The front body 110 is coupled to the rear body 540. A rear body plate 550 is disposed on a seating groove portion 111 formed in the front body 110. Laser welding or bonding may be used to fix the rear body plate 550 to the seating groove portion 111.

The seating groove portion 111 is formed along an inner peripheral surface of the front body 110. The seating groove portion 111 may be formed by recessing an inner peripheral surface of the front body 110. In this case, the recessing direction may be a direction perpendicular to the optical axis. When the rear body plate 550 is disposed on the seating groove portion 111, one surface and a side surface of the rear body plate 550 may be in surface contact with the front body 110.

The substrate 120 may be mounted with an image sensor. The image sensor is used to detect light and convert the light into a digital image, and is used in various fields such as a camera, a smartphone, and a robot. The image sensor is arranged to be aligned with respect to the optical axis.

A terminal unit 130 is connected to one surface of the substrate 120. It is also possible to perform welding in order to couple the terminal unit 130 to the substrate 120. The substrate 120 and the terminal unit 130 are electrically connected.

One end 130A of the terminal unit may be connected to the substrate 120, and the other end 130B of the terminal unit may be formed to penetrate the terminal housing 560. In this case, the outer peripheral surface of the terminal unit 130 may be in contact with the inner peripheral surface of the termination housing 560.

The rear body 540 is coupled to the front body 110 to ensure watertightness. The rear body 540 includes a terminal housing 560.

A first protrusion portion 161 and a second protrusion portion 162 may be formed in the terminal housing 560.

The shapes of the first protrusion portion 161 and the second protrusion portion 162 are complex, which may increase the manufacturing cost when the terminal housing 560 is fabricated of metal. According to the present disclosure, the terminal housing 560 may be fabricated of a plastic material other than metal, thereby reducing the manufacturing cost.

The rear body 540 according to the present invention includes a rear body plate 550, and a terminal housing 560.

A fourth hole 551 may be formed in the center of the rear body plate 550. A plurality of third holes 553 is formed in the rear body plate 550 along the circumference of the fourth hole 551.

The terminal housing 560 includes a first housing plate portion 561, a second housing plate portion 563, and a plurality of first column portions 565. The terminal housing 560 is fabricated by insert injection molding.

The first housing plate portion 561 and the second housing plate portion 563 may be perpendicular to the optical axis.

A plurality of first column portions 565 pass through the plurality of third holes 553. One ends and the other ends of the plurality of first column portions 565 are connected to the first housing plate portion 561 and the second housing plate portion 563, respectively.

Since the first housing plate portion 561, the second housing plate portion 563, the plurality of first column portions 565 are not respectively fabricated but are formed at once by insert injection molding, the first housing plate portion 561, the second casing plate portion 563, the plurality of first column portion 565 have an integral structure that is not separated from each other.

In describing the insert injection molding process, the rear body plate 550 made of metal is placed in the mold, and then the molten plastic is injected into the mold. As the injected plastic is solidified by cooling, the terminal housing 560 is created, with the rear body plate 550 coupled into the terminal housing 560.

After the insert injection molding is completed, a press-fitting process may be performed to insert the terminal unit 130 into the terminal housing 560.

When the terminal housing 560 is fabricated using insert injection molding, even complex shapes of the terminal housing 560 may be easily fabricated. By utilizing insert injection molding, the coupling strength between the rear body plate 550 and the terminal housing 560 may be improved, and the manufacturing cost may be reduced, rather than separately fabricating and coupling the rear body plate 550 and the terminal housing 560.

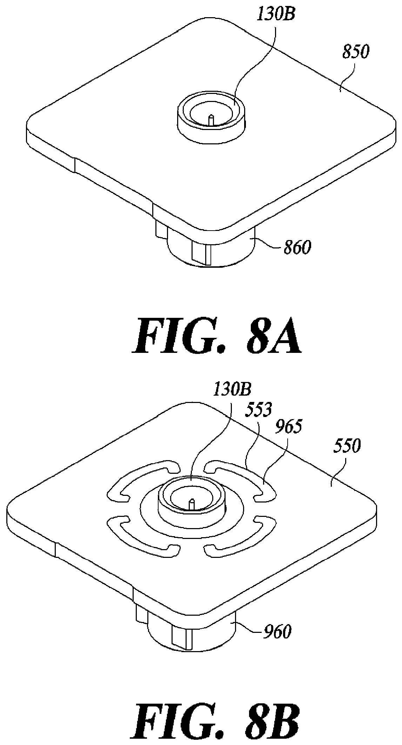

FIGS. 8A and 8B are diagrams showing other embodiments of a rear body of the present disclosure.

Referring to FIG. 8A and FIG. 8B, the figures disclose a rear body generated by insert injection molding. The terminal housings 860 (in FIG. 8A), and 960 (in FIG. 8B) are different in shape from the terminal housing 160 of the first embodiment and the terminal housing 560 of the second embodiment.

In the case of FIG. 8A, insert injection molding is performed so that the plastic for producing the terminal housing 860 does not penetrate the rear body plate 850. In the rear body plate 850 as disclosed in FIG. 8A, a hole is formed only in the center.

In the case of FIG. 8B, plastic for generating the terminal housing 960 was injected until the plurality of third holes 553 of the rear body plate 550 were filled.

As such, insert injection molding may be performed in a variety of ways to create the rear body.

Although the flowchart/timing diagram in the present specification describes the processes as being executed sequentially, this is merely an exemplary description of the technical scope of one embodiment of the present disclosure. In other words, the flowcharts/timing diagrams are not limited to a chronological order, as those skilled in the art to which the present embodiment pertains may make various modifications and variations to the sequence described in the flowchart/timing diagram or to perform one or more of the processes in parallel without departing from the essential characteristics of the embodiments of the present disclosure.

The foregoing descriptions are merely illustrative of the technical scope of the present embodiment, and various modifications and variations will be made by those skilled in the art to which the present embodiment pertains, without departing from the essential characteristics of the present embodiment. Therefore, the present embodiments are not intended to limit the technical scope of the present embodiments, but are intended to be illustrative, and the scope of the technical scope of this embodiment is not limited by these embodiments. The protection scope of the present invention is defined by the following claims.

### Description of Components

| | | | |
|---|---|---|---|
| 100: | camera module for vehicle | 101: | lens module |
| 104: | epoxy | 110: | front body |
| 111: | seating groove portion | 113: | front body hole |
| 120: | substrate | 130: | terminal unit |
| 140: | rear body | 150: | rear body plate |
| 151: | first hole | 153: | a plurality of second holes |
| 160: | terminal housing | 161: | first protrusion portion |
| 162: | second protrusion portion | 163: | inserting portion |
| 164: | coupling member | 165: | housing groove portion |
| 170: | O-ring | 540: | rear body |
| 550: | rear body plate | 551: | fourth hole |
| 553: | a plurality of third holes | 560: | terminal housing |
| 561: | first housing plate portion | 563: | second housing plate portion |
| 565: | a plurality of first column portions | | |

## Claims

1. A camera module for a vehicle, the camera module comprising:
a lens module (101);
a front body (110) into which a part of the lens module (101) is inserted;
a substrate (120) disposed inside the front body (110);
a rear body (540) coupled to the front body (110); and
a terminal unit (130) connected to the substrate (120),
wherein the rear body (540) comprises:
a rear body plate (550) disposed in a seating groove portion (111) formed along an inner peripheral surface of the front body (110); and
a terminal housing (560) coupled to the rear body plate (550),
wherein the terminal housing (560) comprises:
a first housing plate portion (561) perpendicular to the optical axis of the camera module;
a second housing plate portion (563) spaced apart from the first housing plate portion (561); and
a plurality of first column portions (565) penetrating a plurality of third holes (553) formed in the rear body plate (550), one end of each of the plurality of first column portions being connected to the first housing plate portion (561), and the other end of each of the plurality of first column portions being connected to the second housing plate portion (563), and
wherein the terminal unit (130) extends longitudinally from a portion connected to the substrate (120) and penetrates the terminal housing (560).

2. The camera module of claim 1, wherein the rear body (540) is formed by using insert injection molding in which melted plastic is injected into a mold after the rear body plate (550) is disposed in the mold, and
wherein the terminal housing (560) and the rear body plate (550) are coupled to each other in response to the terminal housing (560) being generated by cooling of the melted plastic.

3. The camera module of claim 1, or 2, wherein a watertight seal is formed by coupling the rear body (540) to the front body (110).

4. A method for manufacturing a camera module for a vehicle, the method comprising:
placing a rear body plate (550) made of metal in a mold;
injecting molten plastic into the mold to create a terminal housing (560); and
cooling the molten plastic to create the terminal housing (560) and coupling the terminal housing (560) and the rear body plate (550) to each other,
wherein the terminal housing (560) comprises:
a first housing plate portion (561) perpendicular to the optical axis of the camera module;
a second housing plate portion (563) spaced apart from the first housing plate portion (561); and
a plurality of first column portions (565) penetrating a plurality of third holes (553) formed in the rear body plate (550), one end of each of the plurality of first column portions (565) being connected to the first housing plate portion (561), and the other end of each of the plurality of first column portions (565) being connected to the second housing plate portion (563).

## Patentansprüche

1. Kameramodul für ein Fahrzeug, das Kameramodul aufweisend:
ein Linsenmodul (101);
einen vorderen Körper (110), in den ein Teil des Linsenmoduls (101) eingesetzt ist;
ein Substrat (120), das innerhalb des vorderen Körpers (110) angeordnet ist;
einen hinteren Körper (540), der an den vorderen Körper (110) gekoppelt ist; und
eine Anschlusseinheit (130), die mit dem Substrat (120) verbunden ist,
wobei der hintere Körper (540) aufweist:
eine hintere Körperplatte (550), die in einem Sitznutabschnitt (111) angeordnet ist, der entlang einer inneren Umfangsoberfläche des vorderen Körpers (110) ausgebildet ist; und
ein Anschlussgehäuse (560), das an die hintere Körperplatte (550) gekoppelt ist, wobei das Anschlussgehäuse (560) aufweist:
einen ersten Gehäuseplattenabschnitt (561) senkrecht zu der optischen Achse des Kameramoduls;
einen zweiten Gehäuseplattenabschnitt (563), der von dem ersten Gehäuseplattenabschnitt (561) beabstandet ist; und
mehrere erste Säulenabschnitte (565), die mehrere dritte Löcher (553), die in der hinteren Körperplatte (550) ausgebildet sind, durchdringen, wobei jeweils ein Ende jedes der mehreren ersten Säulenabschnitte mit dem ersten Gehäuseplattenabschnitt (561) verbunden ist und das andere Ende jedes der mehreren ersten Säulenabschnitte mit dem zweiten Gehäuseplattenabschnitt (563) verbunden ist, und
wobei sich die Anschlusseinheit (130) in Längsrichtung von einem Abschnitt, der mit dem Substrat (120) verbunden ist, erstreckt und das Anschlussgehäuse (560) durchdringt.

2. Kameramodul nach Anspruch 1, wobei der hintere Körper (540) durch Verwenden von Einsatzspritzgießen ausgebildet wird, bei dem geschmolzener Kunststoff in eine Form eingespritzt wird, nachdem die hintere Körperplatte (550) in der Form angeordnet wurde, und
wobei das Anschlussgehäuse (560) und die hintere Körperplatte (550) als Reaktion darauf aneinander gekoppelt sind, dass das Anschlussgehäuse (560) durch Abkühlen des geschmolzenen Kunststoffs erzeugt wird.

3. Kameramodul nach Anspruch 1 oder 2, wobei eine wasserdichte Abdichtung durch Koppeln des hinteren Körpers (540) mit dem vorderen Körper (110) ausgebildet wird.

4. Verfahren zum Herstellen eines Kameramoduls für ein Fahrzeug, das Verfahren aufweisend:
Platzieren einer hinteren Körperplatte (550), die aus Metall gefertigt ist, in eine Form;
Einspritzen von geschmolzenem Kunststoff in die Form, um ein Anschlussgehäuse (560) zu erstellen; und
Abkühlen des geschmolzenen Kunststoffs, um das Anschlussgehäuse (560) zu erstellen, und Koppeln des Anschlussgehäuses (560) und der hinteren Körperplatte (550) miteinander,
wobei das Anschlussgehäuse (560) aufweist:
einen ersten Gehäuseplattenabschnitt (561) senkrecht zu der optischen Achse des Kameramoduls;
einen zweiten Gehäuseplattenabschnitt (563), der von dem ersten Gehäuseplattenabschnitt (561) beabstandet ist; und
mehrere erste Säulenabschnitte (565), die mehrere dritte Löcher (553), die in der hinteren Körperplatte (550) ausgebildet sind, durchdringen, wobei ein Ende jedes der mehreren ersten Säulenabschnitte (565) mit dem ersten Gehäuseplattenabschnitt (561) verbunden ist und das andere Ende jedes der mehreren ersten Säulenabschnitte (565) mit dem zweiten Gehäuseplattenabschnitt (563) verbunden ist.

## Revendications

1. Module de caméra pour un véhicule, le module de caméra comprenant :
un module d'objectif (101) ;
un corps avant (110) dans lequel une partie du module d'objectif (101) est insérée ;
un substrat (120) disposé à l'intérieur du corps avant (110) ;
un corps arrière (540) accouplé au corps avant (110) ; et
une unité de terminal (130) reliée au substrat (120),
dans lequel le corps arrière (540) comprend :
une plaque de corps arrière (550) disposée dans une partie de rainure d'assise (111) formée le long d'une surface périphérique interne du corps avant (110) ; et
un logement de terminal (560) accouplé à la plaque de corps arrière (550), dans lequel le logement de terminal (560) comprend :
une première portion de plaque de logement (561) perpendiculaire à l'axe optique du module de caméra ;
une seconde portion de plaque de logement (563) espacée de la première portion de plaque de logement (561) ; et
une pluralité de premières portions de colonne (565) pénétrant dans une pluralité de troisièmes trous (553) formés dans la plaque de corps arrière (550), une extrémité de chacune de la pluralité de premières portions de colonne étant reliée à la première portion de plaque de logement (561), et l'autre extrémité de chacune de la pluralité de premières portions de colonne étant reliée à la seconde portion de plaque de logement (563), et
dans lequel l'unité de terminal (130) s'étend longitudinalement à partir d'une portion reliée au substrat (120) et pénètre dans le logement de terminal (560).

2. Module de caméra selon la revendication 1, dans lequel le corps arrière (540) est formé en utilisant un moulage par injection avec insert dans lequel du plastique fondu est injecté dans un moule après que la plaque de corps arrière (550) est disposée dans le moule, et
dans lequel le logement de terminal (560) et la plaque de corps arrière (550) sont accouplés l'un à l'autre en réponse à la génération du logement de terminal (560) par le refroidissement du plastique fondu.

3. Module de caméra selon la revendication 1 ou 2, dans lequel un joint étanche à l'eau est formé par l'accouplement du corps arrière (540) au corps avant (110).

4. Procédé destiné à fabriquer un module de caméra pour un véhicule, le procédé comprenant :
le placement d'une plaque de corps arrière (550) en métal dans un moule ;
l'injection de plastique fondu dans le moule pour créer un logement de terminal (560) ; et
le refroidissement du plastique fondu pour créer le logement de terminal (560) et l'accouplement du logement de terminal (560) et de la plaque de corps arrière (550) l'un à l'autre,
dans lequel le logement de terminal (560) comprend :
une première portion de plaque de logement (561) perpendiculaire à l'axe optique du module de caméra ;
une seconde portion de plaque de logement (563) espacée de la première portion de plaque de logement (561) ; et
une pluralité de premières portions de colonne (565) pénétrant une pluralité de troisièmes trous (553) formés dans la plaque de corps arrière (550), une extrémité de chacune de la pluralité de premières portions de colonne (565) étant reliée à la première portion de plaque de logement (561), et l'autre extrémité de chacune de la pluralité de premières portions de colonne (565) étant reliée à la seconde portion de plaque de logement (563).
